(19) Europäisches Patentamt / European Patent Office / Office européen des brevets

(11) **EP 2 989 721 B1**

(12) **FASCICULE DE BREVET EUROPEEN**

(45) Date de publication et mention de la délivrance du brevet:
**22.03.2017 Bulletin 2017/12**

(21) Numéro de dépôt: **14718437.8**

(22) Date de dépôt: **18.04.2014**

(51) Int Cl.:
**H04B 1/00** *(2006.01)*

(86) Numéro de dépôt international:
**PCT/EP2014/058020**

(87) Numéro de publication internationale:
**WO 2014/173848 (30.10.2014 Gazette 2014/44)**

(54) **DISPOSITIF CASCADABLE DE RECEPTION NUMERIQUE MULTI VOIES**

KASKADIERBARE VORRICHTUNG FÜR DIGITALEN MEHRKANALEMPFANG

CASCADABLE DEVICE FOR MULTI-CHANNEL DIGITAL RECEPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2013 FR 1300957**

(43) Date de publication de la demande:
**02.03.2016 Bulletin 2016/09**

(73) Titulaire: **THALES**
**92400 Courbevoie (FR)**

(72) Inventeurs:
• **SAADA, Renaud**
**F-78852 Elancourt Cedex (FR)**
• **JULIE, Jean-Jacques**
**F-94270 Le Kremlin Bicêtre (FR)**
• **CLEACH, Alain**
**F-29238 Brest Cedex 3 (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
FR-A1- 2 729 026     FR-A1- 2 919 447
FR-A1- 2 953 079     US-B1- 6 898 235

**Description**

La présente invention concerne un dispositif cascadable de réception numérique multi voies. L'invention s'applique notamment à des machines de traitements numériques du signal temps réel dur opérant sur plusieurs voies de réception, en particulier pour des traitements de signaux d'antennes.

Les domaines d'utilisation du traitement numérique multi voies pour la réception couvrent notamment le radar, les télécommunications, ou encore l'optronique. De manière générale, l'invention est applicable à tout domaine qui nécessite des transferts de données à très haut débit provenant de plusieurs capteurs et plusieurs ressources de calcul numérique, une partie des données provenant de chaque capteur devant être transmises à plus d'une ressource.

Par exemple, dans le cadre de la détection et de la mesure d'arrivée, les dispositifs utilisent des réseaux d'antennes qui nécessitent autant de récepteurs élémentaires qu'il y a d'antennes. Le signal reçu sur chacune des antennes est ramené en bande de base et numérisé, constituant ainsi une voie de traitement.

Les contraintes les plus importantes sont notamment les suivantes :

- Large bande passante instantanée (BPI) ;
- Grand nombre de voies en parallèle à traiter simultanément ;
- Grand nombre d'opérations à réaliser pour détecter les signaux et mesurer leurs directions d'arrivée.

En regard de ces contraintes, les systèmes existant sont limités :

- Soit au traitement de plusieurs voies parallèles mais dans une BPI limitée, au maximum de quelques dizaines de mégahertz ;
- Soit au traitement d'une voie unique ayant une large BPI, jusqu'à 1 GHz;
- Soit à un traitement simplifié mettant en oeuvre plusieurs voies en parallèle.

Ainsi parmi les solutions connues :

- Les machines de traitement utiliées sont limitées en nombre de voies et en BPI ;
- Les machines de traitement à grande BPI ne traitent qu'une voie ;
- Les machines de traitement multi voies et large bande mettent en oeuvre quatre voies au plus en utilisant un traitement simplifié.

Un autre exemple d'application de l'invention se situe dans le cas d'un senseur optronique comportant plusieurs détecteurs individuels fonctionnant chacun dans une bande de fréquence différente. Les images acquises par chaque détecteur sont ensuite traitées en parallèle, pour tirer parti de la diversité introduite par les différentes bandes de fréquence. Chaque image est alors découpée en zones, les zones identiques provenant de chaque détecteur étant transmises à une même ressource de calcul. Les limitations actuelles concernent :

• Le nombre de détecteurs pouvant fonctionner en parallèle
• Le nombre de zones traitables en parallèle et donc la taille des images acquises

Dans le domaine RF, les solutions existantes imposent donc des limitations qui interdisent le traitement complet, en amplitude et en phase, de signaux à large bande. Ce traitement devient indispensable pour être capable de traiter simultanément tous les types de signaux reçus, communication et radar, en prenant en compte les cas multi sources et en traitant sans commutation d'antennes la polarisation des ondes reçues. Aucune des solutions connues ne résout donc les problèmes suivants :

- Routage déterministe d'un grand nombre de signaux large bande entre ressources de calcul en temps réel - par déterministe on entend la capacité à maintenir une synchronisation stricte des traitements ;
- Capacité d'augmenter la puissance de calcul par mise en cascade de modules sans limitation de débit.

Un document FR 2 953 079 divulgue un système de réception numérique multivoies.

Un but de l'invention est notamment de résoudre les inconvénients précédemment décrits. À cet effet l'invention a pour objet un dispositif de réception numérique comportant N voies de réception, aptes à recevoir des signaux dans une bande de fréquences données, chacune des voies étant équipée d'un récepteur numérique recevant les signaux numérisés de ladite bande de fréquence, lesdits signaux étant découpés dans chaque voie de réception en sous-bandes par des moyens d'analyse, chaque récepteur numérique comportant une ressource de calcul, chaque récepteur opérant dans une sous-bande qui lui est affectée et transférant les signaux des autres sous-bandes vers les récepteurs affectés auxdites autres sous-bandes, les récepteurs étant regroupés par paires, chaque récepteur d'une paire effectue le routage de signaux vers le deuxième récepteur de ladite paire, les signaux routés étant les signaux des récepteurs des autres paires qui ne sont pas en liaison directe avec ledit deuxième récepteur.

Dans un mode de réalisation particulier, la bande de fréquences B est découpée en un nombre $N_{SB}$ de sous-bandes égale au nombre N de voies de réception.

Les voies de réception captent par exemple des signaux RF issues d'antennes, le découpage en sous-bandes étant effectué par analyse fréquentielle.

Les voies de réception captent par exemple des signaux issus de senseurs optiques.

Dans un autre mode de réalisaiton particulier, le nombre N de voies de réception est une puissance de 2, le nombre de voies N étant par exemple égal à 8.

Dans ce dernier cas, les récepteurs numériques étant regroupés en quatre paires (A1, A2), (B1, B2), (C1, C2) et (D1, D2), les échanges se faisant selon les sous-bandes SB1, SB2, SB3, SB3, SB5, SB6, les récepteurs A1, A2, B1, B2, C1, C2, D1, D2 étant affectés respectivement aux sous-bandes SB1, SB2, SB3, SB3, SB5, SB6SB7 et SB8, SB1 correspondant aux $N_{SB}/8$ sous-bandes du 1$^{er}$ huitième de ladite bande B, SB2 correspondant aux $N_{SB}/8$ sous-bandes du 2$^{ème}$ huitième de B, SB3 correspondant aux $N_{SB}/8$ sous-bandes du 3$^{ème}$ huitième de B, SB4 correspondant aux $N_{SB}/8$ sous-bandes du 4$^{ème}$ huitièmes de B, SB5 correspondant aux $N_{SB}/8$ sous-bande du 5$^{ème}$ huitième B, SB6 correspondant aux $N_{SB}/8$ sous-bandes du 6$^{ème}$ huitième de B, SB7 correspondant aux $N_{SB}/8$ sous-bandes du 7$^{ème}$ huitième de B, SB8 correspondant aux $N_{SB}/8$ sous-bandes du 8$^{ème}$ huitièmes de B,

les signaux de la sous-bande SBi reçus par A1 sont tranférés directement vers le récepteur associé à SBi, les signaux de la sous-bande SBi reçus par A2 sont transférés via A1, les signaux SBi reçus par B2 sont transférés directement, les signaux SBi reçus par C1 sont transférés directement, les signaux SBi reçus par C2 sont transférés via C1, les signaux SB3 reçus par D1 sont transférés directement et les signaux SBi reçus D2 sont transférés via D1, i variant de 1 à 8.

Les transferts entre récepteurs numériques se faisant par des liaisons physiques bidirectionnelles, les paires sont par exemple implantées chacune sur une carte et reliés par une liaison physique, les liaisons physiques entre lesdites cartes étant réalisées par une carte (50) dite de liaison, les cartes de paires étant connectées à la carte de liaison.

Dans un autre mode de réalisation possible, le dispositif est composé de modules connectés en cascade, un module (90) étant un dispositif selon l'une quelconque des revendications précédentes , les modules étant reliés entre eux via les récepteurs, le premier récepteur et le deuxième récepteur d'une paire d'un module communiquant respectivement avec le premier récepteur et le deuxième récepteur de la paire correspondante du module (90) précédent dans la chaîne cascadée.

D'autres caractéristiques et avantages apparaîtront à l'aide de la description qui suit faite en regard de dessins annexés qui représentent :

- la figure 1a, l'organisation générale d'un dispositif selon l'invention ;
- la figure 1b, un exemple de réalisation des voies de réceptions disposées en amont d'un routeur numérique mis en oeuvre par un dispositif selon l'invention ;
- la figure 1c, un exemple de réalisation des voies de réception numériques en aval du routeur précité ;
- la figure 1d, un exemple d'application dans le domaine optronique ;
- la figure 2, une illustration du débit en sortie d'analyse fréquentielle ;
- la figure 3, le principe de fonctionnement en sous-bandes d'un dispositif selon l'invention pour deux voies de réception ;
- les figures 4a et 4b, deux exemples de réalisation physique pour le cas à deux voies de réception ;
- la figure 5, une réalisation physique dans un cas d'application à quatre voies de réception ;
- la figure 6, un exemple de réalisation physique selon l'invention dans un cas d'application à quatre voies de réception ;
- la figure 7, une illustration du principe de fonctionnement en sous-bandes selon l'invention pour quatre voies de réception ;
- la figure 8, une réalisation physique dans un cas d'application à huit voies de réception ;
- la figure 9, un exemple de réalisation physique selon l'invention dans un cas d'application à huit voies de réception ;
- la figure 10, une illustration du principe de fonctionnement en sous-bandes selon l'invention pour huit voies de réception ;
- la figure 11, un exemple de réalisation modulaire d'un dispositif selon l'invention ;
- la figure 12, un exemple d'application d'un dispositif selon l'invention.

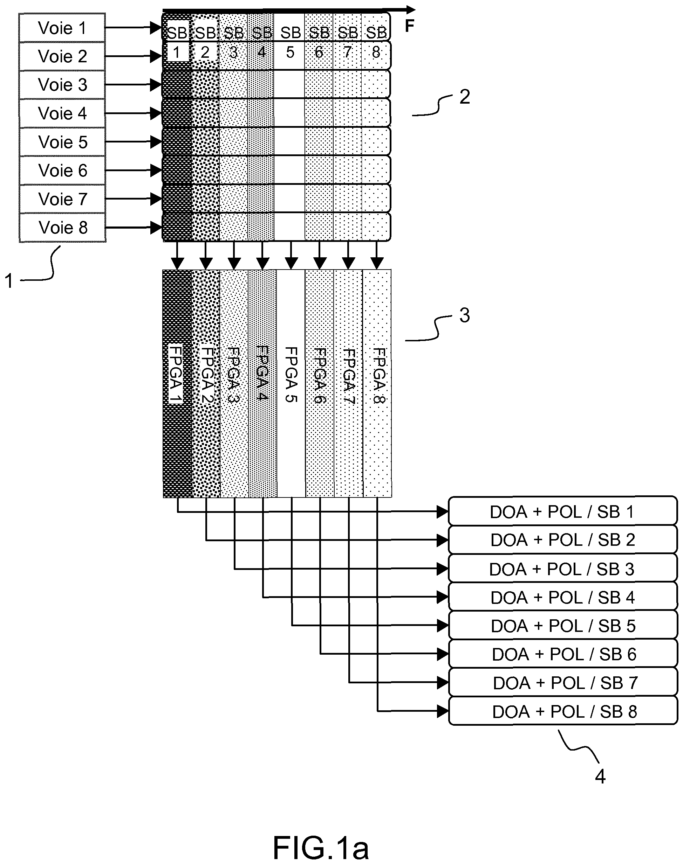

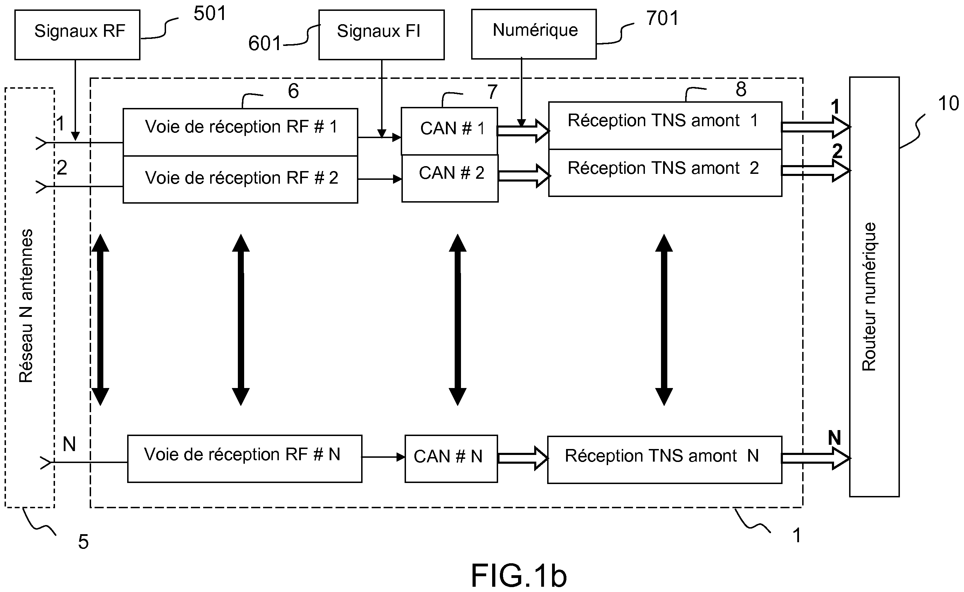

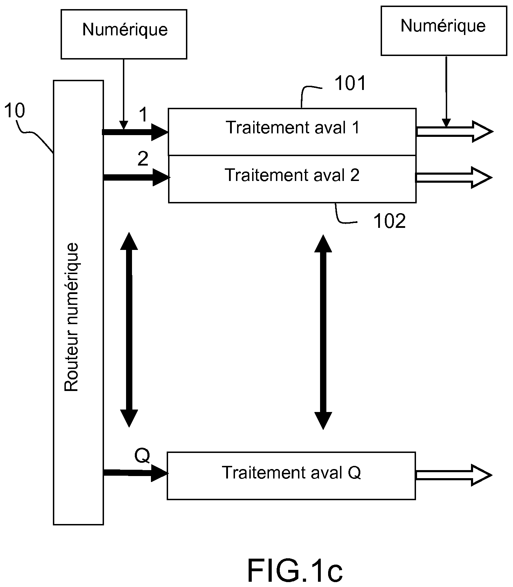

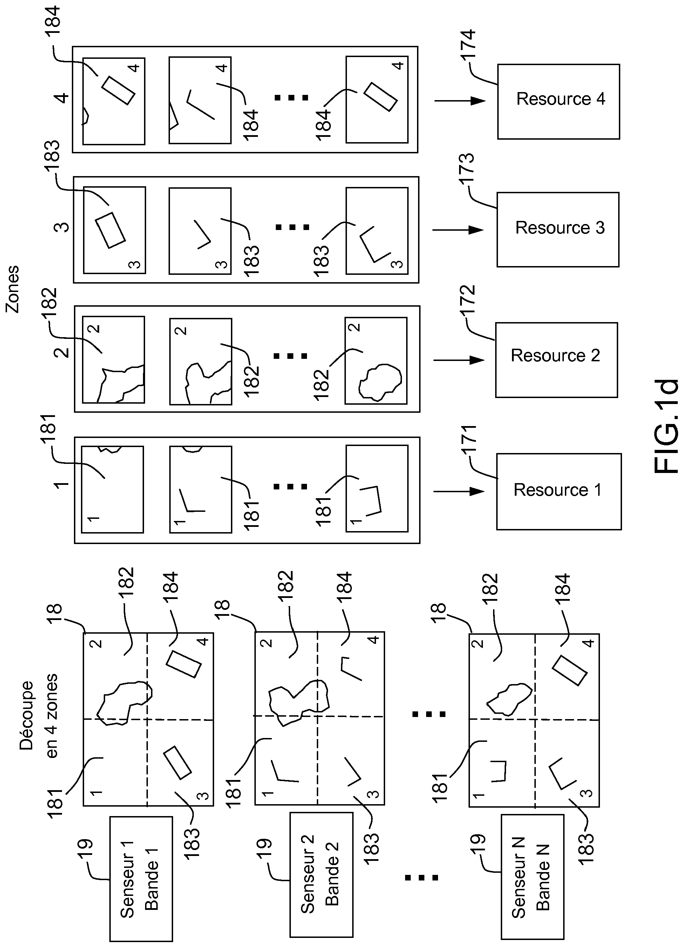

La figure 1 illustre l'organisation générale d'un dispositif selon l'invention. Un problème à résoudre dans un traitement d'antenne multivoies est celui de la concentration des flux de données sur un noeud de calcul. En effet, le nombre de voie, associé au nombre de bits de codage et à la fréquence d'échantillonnage minimale demande une grande puissance de calcul. En particulier, il faut, pour réaliser l'estimation de la DOA (Direction d'arrivée) en gisement et en site et l'estimation de la polarisation des ondes incidentes, disposer des signaux recueillis par toutes les antennes à surveiller. Ce problème est par ailleurs connu sous l'expression « corner-turn » ou changement d'axes.

La figure 1 illustre à titre d'exemple une organisation avec 8 antennes et 8 voies de réception 1. L'organisation peut bien sûr être appliquée avec un nombre de voies différent comme indiqué par la suite.

Les émetteurs sous surveillance opèrent dans une bande de fréquence B0. Une analyse large bande permet, suivant une logique non décrite ci-après, de limiter cette bande dans une bande B exploitable numériquement, après conversion analogique numérique. Cette bande B peut englober plusieurs bandes de fréquences, juxtaposées ou non.

En réception, le traitement commence, de manière classique, par une distribution par canaux issus des voies associées à chaque antenne, en sortie des convertisseurs analogiques-numériques. Cette opération permet de découper la bande B en sous-bandes équivalentes. Cette opération peut-être réalisée en utilisant un banc de filtres polyphasés ou une analyse fréquentielle par FFT. On choisit généralement des sous-bandes d'égales largeurs.

De manière générique, on appelle sous-bande, toute découpe de l'information obtenue en entrée du système en sous-ensembles permettant de reformer le signal initial par recombinaison de ces sous-bandes. Il peut donc s'agir d'une découpe fréquentielle comme dans le cas exposé précédemment, mais également d'une découpe temporelle ou toute autre dimension caractérisant les données.

Le principe consiste à passer d'un référentiel de N capteurs, des antennes dans ce cas des figures 1b et 1c décrites par la suite, opérant sur une bande B à un référentiel de Q voies de traitement numérique opérant chacun sur une bande de fréquence B/Q. Dans cet exemple, les récepteurs numériques et les voies de traitement numérique sont réalisés dans une ou plusieurs ressources de calcul numérique.

Les figures 1b et 1c illustrent ce passage, la figure 1b présentant un exemple d'architecture en amont d'un routeur 10 et la figure 1c un exemple d'architecture en aval de ce routeur 10. Le routage effectué par ce routeur 10 sera décrit par la suite relativement aux figures.

La figure 1b présente un exemple de réalisation où chaque antenne du réseau d'antennes 5 est reliée à un récepteur RF. Ce récepteur 6 transforme les signaux RF reçus 501 en signaux à fréquence intermédiaire 601, lesquels sont numérisés par un convertisseur analogique-numérique 7. Les signaux numérique 701 en sortie des convertisseurs sont reçus par un récepteur numérique 8. Chaque récepteur numérique 8 reçoit en amont les signaux sur la totalité de la bande B. Plus particulièrement, chaque récepteur reçoit l'intégralité de la bande B issue de l'antenne qui lui est affectée découpée en Q sous-bandes. Le découpage en sous-bandes peut être effectué dans un récepteur numérique 8 par une série de banc de filtre polyphasés ou par transformation de Fourier rapide FFT comme cela sera précisé par la suite.

La figure 1c présente les voies de traitement numérique en aval du routeur 10. Chacune de ces voies de traitement transmet ses données reçues à la ressource de calcul qui lui est associée. Chaque voie de 101, 102 ... 10Q traite la somme des signaux provenant des N antennes dans la sous-bande qui lui est affectée.

En pratique, la partie en amont du routeur 10 ne fournit pas les signaux de réception mais réalise une combinaison ou répartition des voies de réceptions en sous-bandes formant un brassage. Le routeur aiguille les sous-bandes vers les voies de traitement en aval qui leurs sont affectés.

Rien n'impose d'avoir un nombre Q de sous-bandes égal au nombre Nd'antennes. Ce nombre Q dépend des capacités de traitement en aval et non du nombre d'antennes par rapport aux nombres de voies en amont. Le nombre Q de sous-bandes est notamment dimensionné par la largeur de bande maximale B à traiter, le recouvrement souhaité entre sous-bandes consécutives et le nombre de ressources de traitements disponibles, une ressource de traitement étant affectée à chaque sous-bande. Par la suite, on notera $N_{SB} = Q$ le nombre de sous-bandes.

La figure 1d illustre un exemple d'application dans le domaine optronique. N senseurs optiques 19 reçoivent des signaux dans une bande donnée. Dans cet exemple, les bandes sont différentes d'un senseur à l'autre mais pourraient être la même bande comme dans l'exemple des figures 1b et 1c. Les N images 18 produites à partir de ces senseurs sont découpées en quatre zones identiques, correspondant à une même partie de l'image. Les premières zones 181 sont affectées à une première ressource 171, les deuxièmes zones 182 sont affectées à une deuxième ressource 172, les troisièmes zones 183 sont affectées à une troisième ressource 173 et les quatrième zones 184 sont affectées à une quatrième ressource 174 sur le même principe que l'affectation des sous-bandes dans les figures 1b et 1c.

Par la suite, le terme de sous-bande pourra définir aussi bien une sous-bande de fréquence qu'une zone géographique d'une image numérisée par exemple.

Il est possible de combiner les réceptions des figures 1b et 1d, c'est-à-dire de traiter à la fois des signaux issus d'antennes (5) et des signaux issus de senseurs optiques (19), les traitements en aval des codeurs 7 étant analogues dans les deux cas.

On revient à l'organisation illustrée par la figure 1 a. Chacun des Q traitements opère sur l'ensemble des N voies d'antenne, N et Q étant égaux à 8 dans l'exemple de cette figure 1, sur le secteur de fréquences 2 de largeur B/N qui lui est assigné, chaque secteur formant une sous-bande que l'on pourra noter SB par la suite. Un récepteur numérique reçoit en amont les signaux sur la totalité de la bande, mais opère en aval seulement sur une sous-bande qui lui est affectée. En d'autres termes cela signifie que seuls les signaux de la sous-bande affectée à un récepteur sont pris en compte par l'ensemble des composants de sa chaîne de réception.

Comme indiqué précédemment, le nombre de sous-bandes $N_{SB}$ n'est pas obligatoirement égal à N. $N_{SB}$ peut aussi dépendre de la largeur d'impulsions visée, typiquement dans cette partie d'un récepteur les plus petites impulsions recherchées ont une largeur d'impulsion de l'ordre de 200ns, voire moins. Cela entraîne des largeurs de filtres de l'ordre de 100 MHz.

A titre d'exemple l'architecture de la figure 1 comporte 8 voies et 8 sous-bandes SB1, SB2, SB3, SB4, SB5, SB6, SB7, SB8. Chaque voie reçoit des signaux sur l'ensemble de la bande B :

$$B = SB1+SB2+SB3+SB4+SB5+SB6+SB7+SB8.$$

Par exemple, le récepteur disposé sur la voie 1 opère sur la sous-bande SB1 présente sur toutes les voies, le récepteur de la voie 2 opère sur la sous-bande SB2 présente sur toutes les voies et ainsi de suite.

Dans l'architecture de la figure 1, le flux de données provenant des voies 1 dans la bande B est ainsi séparé en sous-bandes de fréquences 2 et au moins une ressource de calcul 3 est affectée à chaque sous-bande. Une ressource est par exemple implantée dans un circuit de type FPGA. Chaque ressource de calcul réalise les traitements de détection, mesure de DOA et de polarisation 4 pour tout l'espace couvert par le réseau d'antenne et dans sa sous-bande associée. Dans ce cas, le flux convergeant vers une ressource est égal à 1/8$^{ème}$ du débit total.

Pour 8 voies avec une BPI de 1 GHz échantillonnée en respectant tout juste le critère de Nyquist sur 12 bits, le flux est de 8 x 2 x 1 x 12 = 192 Gb/s. En prenant en compte les effets des calculs (en cas de filtrage le nombre de bits à traiter augmente, on prend par exemple 2 bits supplémentaires) et des formats (codage nécessitant 10 bits pour 8 transmis), on atteint un flux de 8 x 2 x 1 x14 x 10/8 = 280 Gb/s. Ainsi, en l'absence d'organisation particulière le flux à concentrer en un noeud de calcul peut atteindre 280 Gb/s, ce qui est impossible à traiter avec les moyens actuels.

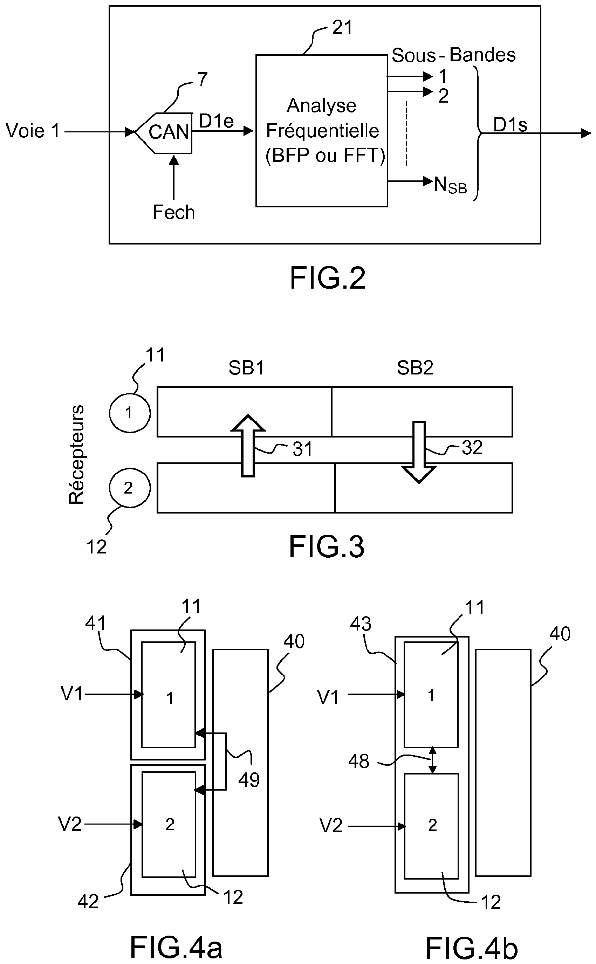

La figure 2 illustre le débit en sortie d'analyse fréquentielle. Cette analyse fréquentielle permet de former les $N_{SB}$ sous-bandes. Ces sous-bandes peuvent être formées par une série de banc de filtres polyphasés ou par transformation de Fourier rapide FFT. La figure 2 illustre le débit pour une voie de réception 1, en nombre de bits par seconde.

En entrée d'analyse fréquentielle 2, le débit $De1 = 1 \times Ne \times F_{ech}$, où 1 correspond au nombre de voie, nombre égal à 1 en sortie d'une voie, Ne représente le nombre de bits en sortie du convertisseur analogique-numérique CAN 7 et $F_{ech}$ la fréquence d'échantillonnage du signal au niveau du CAN. Le CAN est placé sur la voie 1 à l'entrée des moyens d'analyse fréquentielle 2.

En sortie d'analyse fréquentielle, en raison du changement de bande B en sous-bandes, le flux Ds1 devient :

$$Ds1 = (1 \times Ns \times 2\ I/Q \times F_{ech}/ N_{SB}) \times N_{SB}, \text{ en nombre de bits par seconde où :}$$
$$(1 \times Ns \times 2\ I/Q \times F_{ech}/ N_{SB}) \text{ est le flux sur une sous-bande, I et Q étant les}$$
$$\text{composantes en quadrature.}$$

La sortie du CAN 7 est un signal temporel échantillonné, ayant un débit De1, qui est transformé en sortie d'analyse fréquentielle en un signal fréquentiel échantillonné ayant un débit Ds1.

Les lignes qui suivent mettront en évidence le lien de récurrence qui existe en fonction du nombre de voies. On part du principe qu'un récepteur peut travailler sur plusieurs sous-bandes, voire toutes comme expliqué ci-dessus. Comme l'illustre la figure 1, il y a autant de récepteurs qu'il y a de voies de réceptions 1.

La figure 3 illustre le cas où le nombre de voies est égal à deux, et plus particulièrement elle illustre les échanges de données entre les récepteurs numériques11, 12 des deux voies. Dans la description qui suit, un récepteur numérique est le circuit placé en sortie des codeurs 7. Chaque récepteur numérique fait en fait fonction de ressource de calcul, comme celles notamment mentionnées relativement à la figure 1 a. En particulier ils réalisent à la fois la découpe en sous-bandes sur les signaux provenant des antennes 5 ou plus généralement des voies de réception, par exemple par analyse fréquentielle, et effectuent également le traitement de toutes les sous-bandes affectées à cette même ressource. Ces récepteurs numériques, ressources de calcul, peuvent être des FPGA, des processeurs ou tout autre circuit numérique apte à réaliser ces fonctions.

Pour un nombre donné de récepteur Nrec, le nombre de sous-bandes à échanger 31, 32 par récepteur est égal à (Nrec - 1) $N_{SB}$ /2, soit $N_{SB}$ /2 sous-bandes, Nrec étant égal à deux. Le débit est donc de Ds1 / 2 du premier récepteur vers le deuxième récepteur et de Ds1 / 2 du deuxième récepteur vers le premier récepteur.

Le récepteur 11 affecté à la première voie échange 32 l'ensemble de sous-bande SB2 avec le récepteur 12 de la deuxième voie, ce dernier 12 échangeant 31 l'ensemble de sous-bande SB1 avec le premier récepteur 11. Un lien bidirectionnel permet de réaliser cette opération. SB1 correspond par exemple aux $N_{SB}$ /2 premières sous-bandes, moitié de la bande B, et SB2 correspond aux $N_{SB}$ /2 dernières sous-bandes, deuxième moitié de B. On fait l'hypothèse que $N_{SB}$ est un multiple de deux. Le débit échangé pour chaque récepteur est Ds2 = Ds1 / 2.

Les figures 4a et 4b illustrent deux réalisations physiques possibles des échanges entre les récepteurs 11, 12 de la figure précédente. La figure 4a illustre un cas où chaque récepteur est implanté sur une carte 41, 42 et communiquent 49 via une autre carte 40, par exemple une carte de fond de panier. Les cartes 41, 42 peuvent avoir des dimensions normalisées, par exemple au format 3U. La figure 4b illustre un cas où les deux récepteurs 11, 12 sont implantés sur une même carte 43, par exemple au format 6U, et communique 48 via cette même carte 43.

Le lien permettant d'échanger entre les deux récepteurs est un lien logique. Un lien logique peut être constitué de plusieurs liens physiques en fonction notamment du débit admissible sur chaque lien physique. On définit par ailleurs la notion de canal comme étant le média permettant d'échanger de bout en bout entre un récepteur quelconque et un autre récepteur.

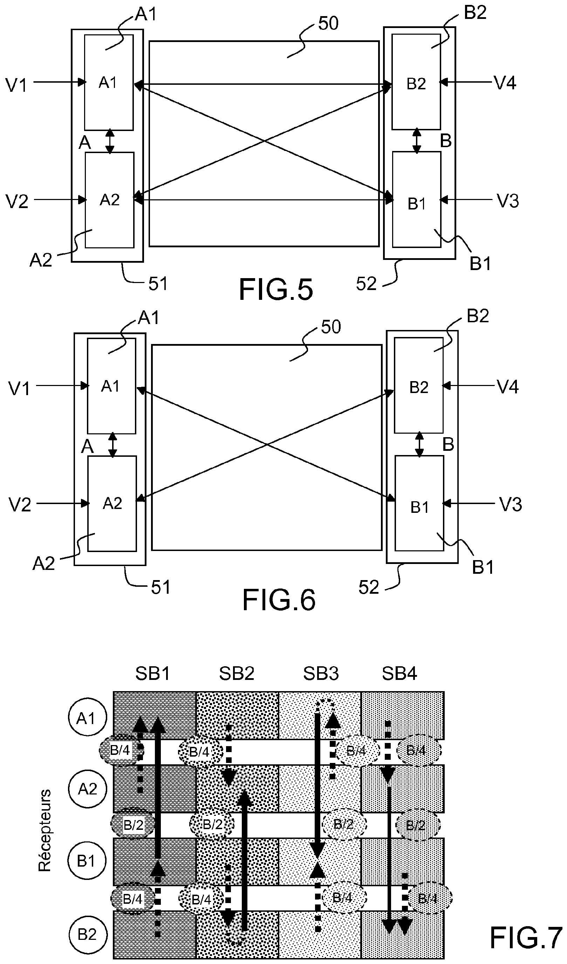

La figure 5 illustre les échanges entre 4 voies, chacune des voies étant notée V1, V2, V3 et V4. Plus particulièrement, la figure 5 est une illustration physique des échanges.

Chaque récepteur échange avec tous les autres récepteurs dans la sous-bande qui lui est affecté. Le passage à quatre voies de réception amène à échanger (Nrec - 1) $N_{SB}/4$ soit 3 $N_{SB}/4$ sous-bandes entre chacun des quatre récepteurs.

Dans la solution de la figure 5, chaque récepteur échange directement avec chacun des autres récepteurs. Ainsi, le récepteur 11 de la voie V1 échange avec le récepteur 12 de la voie V2, le récepteur 13 de la voie V3 et avec le récepteur 14 de la voie V4. Dans l'exemple de réalisation physique de la figure 5, les récepteurs sont regroupés deux par deux sur une carte 51, 52, par exemple au format 6U. Deux récepteurs A1, A2 sont par exemple regroupés sur une première carte 51, dite carte A, et deux récepteurs B1, B2 sont par exemple regroupés sur une carte 52, dite carte B. Il y a des échanges intra cartes, c'est-à-dire à l'intérieur d'une même carte, entre les récepteurs A1 et A2 des voies V1 et V2 et entre les récepteurs B1 et B2 des voies V3 et V4. Tous les autres échanges sont des échanges inter cartes, c'est-à-dire entre les deux cartes 51,52. Ils se font via une autre carte 50, dite de liaison, par exemple une carte de fond de panier.

La figure 6 illustre des échanges du type de ceux réalisés dans un dispositif selon l'invention à partir des mêmes récepteurs que ceux de la figure 5 et selon la même implantation. Les échanges de la figure 5 peuvent être simplifiés en utilisant chacun des récepteurs comme un routeur vers son voisin local, c'est-à-dire en fait le récepteur le plus proche. Dans l'exemple des figures 5 et 6, un voisin local d'un récepteur est celui qui est disposé sur la même carte, ainsi les deux premiers récepteurs A1, A2 sont voisins et les deux autres récepteurs B1, B2 sont voisins. Dans la solution de la figure 6, le nombre de liaison inter cartes est ainsi diminué. Les échanges peuvent se faire directement ou via un autre récepteur, faisant alors fonction de routeur. Si on considère le récepteur A1 de la voie V1, il échange directement avec le récepteur A2 de la voie V2, son voisin, il échange directement avec le récepteur B1 de la voie V3 et il échange avec le récepteur B2 de la voie V4 via son récepteur voisin A2. Le processus d'échange est le même pour les autres récepteurs. Il y a deux liens bidirectionnels sur chacun des récepteurs.

La figure 7 illustre les échanges de la figure 6 en mettant en évidence les échanges par sous-bandes SB1, SB2, SB3, SB3, SB1 correspondant aux $N_{SB}/4$ sous-bandes du premier quart B, SB2 correspondant aux $N_{SB}/4$ sous-bandes du deuxième quart de B, SB3 correspondant aux $N_{SB}/4$ sous-bandes du troisième quart de B, et SB4 correspondant aux $N_{SB}/4$ sous-bandes du quatrième quart de B, en faisant l'hypothèse que le nombre $N_{SB}$ de sous-bandes est multiple de 4.

La figure 7 montre que les signaux de la sous-bande SB1 reçus par le récepteur A2 sont transférés directement vers le récepteur A1, les signaux SB1 reçus par B1 sont transférés directement vers A1 et les signaux SB1 reçu par B2 sont transférés vers A1 via B1, B1 jouant le rôle de routeur pour B2.

De même les signaux SB2 reçus par A1 sont transférés directement vers A2, les signaux SB2 reçus par B2 sont transférés directement vers A2 et les signaux SB2 reçus par B1 sont transférés vers A2 via B2.

Les signaux SB3 reçus par A1 sont transférés directement vers B1, les signaux SB3 reçus par B2 sont transférés directement vers B1 et les signaux SB3 reçus par A2 sont transférés vers B1 via A1.

Les signaux SB4 reçus par A1 sont transférés vers B2 via A2, les signaux SB4 reçus par A2 sont transférés directement vers B2 et les signaux SB4 reçus par B1 sont transférés directement vers B2.

Le débit échangé pour chaque voie passe à Ds4 = Ds1 / 4.

Pour 4 voies, dans une configuration conforme aux figures 6 et 7, le débit échangé entre deux récepteurs situés sur des cartes différentes est :

$$D = 2 \times Ds4 = Ds1 / 2.$$

cela, en raison que pour ces échanges inter cartes, un des deux récepteurs fait office de routeur.

Globalement, cela revient à échanger les mêmes débits entre deux récepteurs A1, A2 et B1, B2, situés sur des cartes différentes, que ceux échangés entre deux voies. Cependant, chaque récepteur doit disposer des ressources pour entrer et sortir deux fois plus de données.

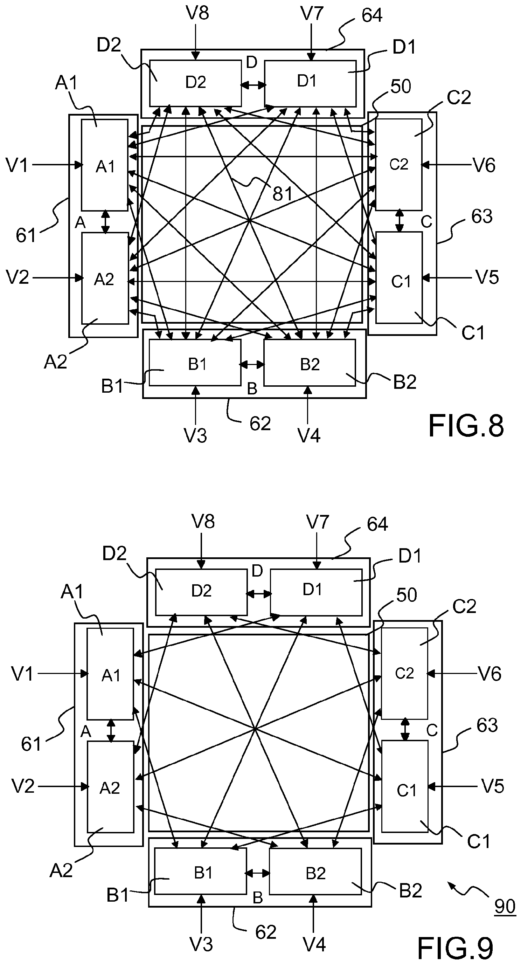

La figure 8 illustre le passage à 8 voies de réception. Comme la figure 5, la figure 8 présente une solution avec toutes les liaisons inter cartes, les récepteurs ne jouant pas le rôle de routeur. Les récepteurs sont regroupés deux par deux sur quatre cartes 61, 62, 63, 64. Les récepteurs A1, A2 affectés respectivement aux voies 1 et 2 sont sur une carte A 61, Les récepteurs B1, B2 affectés respectivement aux voies 3 et 4 sont sur une carte B 62, les récepteurs C1, C2 affectés respectivement aux voies 5 et 6 sont sur une carte C 63 et les récepteurs D1, D2 affectés respectivement aux voies 7 et 8 sont sur une carte D 64. La figure 8 présente donc une solution où toutes les liaisons directes possibles 81 entre les récepteurs sont utilisées.

Le passage à 8 voies de réception amène à échanger (Nrec - 1) $N_{SB}/8$ soit 7 $N_{SB}/8$ sous-bandes entre chacun des 8 récepteurs.

La figure 9 illustre une solution mise en oeuvre dans un dispositif selon l'invention où le schéma de liaisons précédent est simplifié en utilisant chacun des récepteurs comme routeur vers son voisin local. Ainsi, le récepteur A1 échange directement avec les récepteurs B1, C1 et D1 et via un routage avec les récepteurs B2, C2 et D2. Le routeur est A2, le voisin de A1, ou B1, C1 et D1, les voisins respectifs de B2, C2 et D2, selon la direction des échanges.

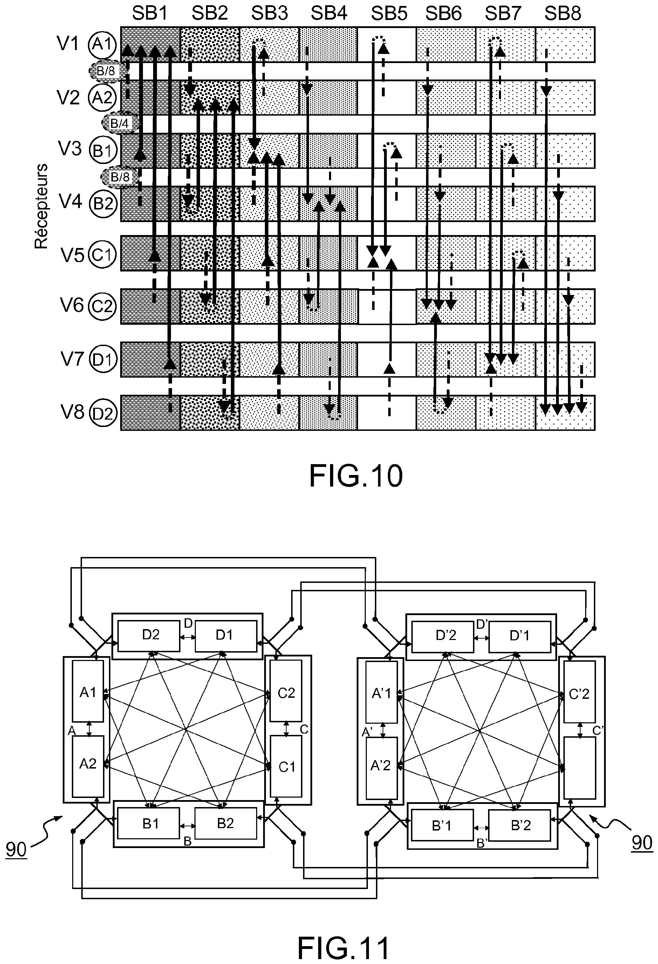

La figure 10 illustre les échanges par sous-bandes, de façon analogue à la figure 7. Plus particulièrement, la figure 10 illustre les échanges par sous-bandes SB1, SB2, SB3, SB3, SB5, SB6, SB7 et SB8, SB1 correspondant aux $N_{SB}/8$ sous-bandes du $1^{er}$ huitième de B, SB2 correspondant aux $N_{SB}/8$ sous-bandes du $2^{ème}$ huitième de B, SB3 correspondant aux $N_{SB}/8$ sous-bandes du $3^{ème}$ huitième de B, SB4 correspondant aux $N_{SB}/8$ sous-bandes du $4^{ème}$ huitième de B, SB5 correspondant aux $N_{SB}/8$ sous-bandes du $5^{ème}$ huitième B, SB6 correspondant aux $N_{SB}/8$ sous-bandes du $6^{ème}$ huitième de B, SB7 correspondant aux $N_{SB}/8$ sous-bandes du $7^{ème}$ huitième de B, SB8 correspondant aux $N_{SB}/8$ sous-bandes du $8^{ème}$ huitièmes de B, en faisant l'hypothèse que le nombre $N_{SB}$ de sous-bandes est multiple de 8. On peut prendre le cas particulier $N_{SB} = 8$. Le débit échangé pour chaque voie passe à Ds8 = Ds1 / 8.

On considère à titre d'exemple les échanges du récepteur B1 affecté à la voie 3. Les signaux SB3 reçus par A1 sont transférés directement vers B1, les signaux SB3 reçus par A2 sont transférés via A1, les signaux SB3 reçus par B2 sont transférés directement, les signaux SB3 reçus par C1 sont transférés directement, les signaux SB3 reçus par C2 sont transférés via C1, les signaux SB3 reçus par D1 sont transférés directement et les signaux SB3 reçus D2 sont transférés via D1. Le principe est le même pour les autres récepteurs.

Les ressources de calcul associées en sortie des récepteurs ne sont pas représentées. Ils peuvent être implantés sur une carte spécifique ou implantés sur la carte supportant les paires de récepteurs. Dans une application d'écoute électromagnétique, ces ressources calculent notamment les directions d'arrivée (DOA) et la polarisation des ondes reçues.

Les tableaux ci-dessous présentent le cas étendu à $2^N$ voies et $2^N$ récepteurs.

Le premier tableau I ci-dessous correspond à la solution avec toutes les lignes directes, comme dans les cas des figures 5 et 8.

Tableau I

| Nb de voies / récepteurs | Nb de sous-bandes à transférer d'un récepteur vers les autres ou à recevoir des autres | Nb de Liens bidirectionnels | Débit échangé par lien bidirectionnel (hors recouvrement ) | Débit échangé par lien mono-directionnel (hors recouvrement) |
|---|---|---|---|---|
| 1 | $N_{SB} \rightarrow SO$ | 0 | | |
| 2 | $N_{SB} / 2$ | 1 = 0 inter + 1 intra | | |
| 4 | $3 N_{SB} / 4$ | 6 = 4 inter + 2 intra | Ds1 / 4 | Ds1 / 8 |
| 8 | $7 N_{SB} / 8$ | 28 = 24 inter + 4 intra | Ds1 / 8 | Ds1 / 16 |
| 16 | $15 N_{SB} / 16$ | 120 = 112 inter + 8 intra | Ds1 / 16 | Ds1 / 32 |
| 32 | $31 N_{SB} / 32$ | 496 = 480 inter + 16 intra | Ds1 / 32 | Ds1 / 64 |
| Nrec = $2^N$ | $(2^N-1) N_{SB} / 2^N$ | $N_{SB}$ x $(2^N -1)/2$ = W inter + $2^{N-1}/2$ intra | Ds1 / $2^N$ | Ds1 / $2^{N+1}$ |

Le tableau II ci-dessous correspond au cas simplifié selon l'invention avec routage numérique effectué par les récepteurs, comme dans les cas des figures 6 et 9.

Tableau II

| Nb de voies / récepteurs | Nb de sous-bandes à transférer d'un récepteur vers les autres ou à recevoir des autres | Nb de Liens bidirectionnels | Débit échangé par lien inter-carte (hors recouvrement) | Débit échangé par lien intra-carte (hors recouvrement) |
|---|---|---|---|---|
| 1 | $N_{SB} \rightarrow SO$ | 0 | $Ds1 \rightarrow SO$ | |
| 2 | $N_{SB} / 2$ | 1 = 0 inter + 1 intra | 0 | Ds1 / 2 |
| 4 | $3 N_{SB} / 4$ | 4 = 2 inter + 2 intra | 2 Ds1 / 4 | Ds1 / 2 |
| 8 | $7 N_{SB} / 8$ | 16 = 12 inter + 4 intra | 2 Ds1 / 8 | Ds1 / 2 |
| 16 | $15 N_{SB} / 16$ | 64 = 56 inter + 8 intra | 2Ds1 / 16 | Ds1 / 2 |
| 32 | $31 N_{SB} / 32$ | 256 = 240 inter + 16 intra | 2 Ds1 / 32 | Ds1 / 2 |
| Nrec = $2^N$ | $(2^N - 1) N_{SB} / 2^N$ | Nrec/2 x [((Nrec/2)-1)+1] [Nrec/2x(Nrec/2)-1)] +[Nrec/2] | 2 Ds1 / $2^N$ | Ds1 / 2 |

Plus on augmente le nombre de voies / récepteurs et plus le nombre de liens directs augmente. On peut constater que jusqu'à 8 récepteurs, ce nombre reste à priori acceptable en regard des technologies actuelles vis-à-vis des bandes d'analyses actuelles. Pour diminuer le nombre de liens, l'invention utilise avantageusement le fait que les échanges en mode série bidirectionnels actuels autorisent des débits très importants. Il en résulte une architecture simplifiée telle que présentée par les figures 6, 9 et le tableau II étendu à N voies.

Le nombre de liens bidirectionnels inter-récepteurs est égal à (Nrec/2 - 1) par récepteur, d'où le tableau III suivant :

Tableau III

| Nrec | Nb de lien bidirectionnels inter-récepteurs |
|---|---|
| 1 | 0 |
| 2 | 1 |
| 4 | 3 |
| 8 | 7 |
| 16 | 15 |
| 32 | 31 |
| $2^N$ | $2^N - 1$ |

On constate que pour le mode optimisé du tableau II :

- le débit intra-carte reste constant et égal à Ds1 / 2 ;
- le débit inter-carte, celui qui circule sur la carte 50, en fond de panier par exemple, est multiplié par 2 mais sur 2 fois moins de liens, les modes des tableaux I et II sont équivalents.

Avantageusement, l'invention limite le nombre de liens physiques. De fait, l'invention simplifie la réalisation physique tout en conservant des capacités de transfert suffisantes.

Dans le cas à 8 récepteurs on a besoin, en fonction de la configuration retenue, de :

- 28 liens inter-récepteurs avec chacun un débit à passer de Ds1 / 8 dans la solution du tableau I ;
- 16 liens inter-récepteurs dans la solution selon l'invention (tableau II) décomposés en 12 liens inter-cartes avec un débit de Ds1 / 4 pour chacun d'entre eux et 4 liens intra-cartes avec un débit de Ds1 / 2 pour chacun d'entre eux.

Dans ce cas à 8 récepteurs, seuls 3 liens inter-cartes sont nécessaires par récepteur.

Les technologies actuelles permettent de mettre en oeuvre 16 liens inter-récepteurs par récepteur. Avec cette hypothèse, on constate qu'avec une technologie :

- Type Virtex 6, on peut accepter de travailler avec une bande passante de 1 GHz. Le nombre de liens, égal à 12, permettant de conserver 4 liens par récepteur que l'on peut attribuer à d'autres fonctions qu'aux échanges inter-récepteurs. On peut par exemple utiliser ces 4 liens par récepteur pour des entrées/sorties vers un autre système.
- Type Virtex 7, on peut accepter de travailler avec une bande passante de 2 GHz. Le nombre de liens, égal à 12, permet de conserver 4 liens par récepteur que l'on peut attribuer à d'autres fonctions comme dans le cas Virtex 6, notamment des échanges vers d'autres systèmes.

Il est à noter que le débit en terme de liaisons intra-carte est systématiquement égal à Ds1 / 2.

La figure 11 illustre un autre mode de réalisation d'un dispositif selon l'invention. Cet exemple de réalisation met en évidence l'aspect modulaire de l'invention. Ayant déterminé un nombre maximum possible de récepteurs par module en termes de faisabilité et de performance, on obtient un dispositif à N récepteurs par assemblage des modules. Un module de base est un ensemble 90 du type de celui de la figure 9. Un module de base comporte par exemple 8 récepteurs comme l'exemple de la figure 9, avec la même architecture et les mêmes liaisons et routages. Pour passer à 16 voies, on assemble deux modules pour obtenir le dispositif tel qu'illustré par la figure 11.

On utilise avantageusement les liens disponibles par récepteur pour connecter les modules entre eux, la connexion entre modules se faisant par les récepteurs. L'organisation étant analogue entre les deux modules, le deuxième module comporte 8 récepteurs : A'1, A'2, B'1, B'2, C'1, C'2, D'1 et D'2 agencé comme les récepteurs A1, A2, B1, B2, C1, C2, D1 et D2 de la figure 9. La connexion entre les deux modules se fait en connectant le récepteur A1 avec le récepteur A'1, A2 avec A'2, B1 avec B'1, B2 avec B'2, C1 avec C'1, C2 avec C'2, D1 avec D'1 et D2 avec D'2. Plus généralement, le premier récepteur et le deuxième récepteur d'une paire d'un module (90) communiquent respectivement avec le premier récepteur et le deuxième récepteur de la paire correspondante du module (90) précédent dans la chaîne cascadée.

Avantageusement, l'architecture d'un dispositif selon l'invention offre donc la capacité à étendre la puissance de calcul en cascadant une deuxième brique identique, c'est-à-dire un module. Cette brique est donc capable de recevoir et transmettre la totalité du flux numérique en continu.

Dans une architecture cascadée, l'étage de tête reçoit les signaux analogiques de 8 voies parallèles. Les entrées sont échantillonnées par personnalisation des cartes de traitement au moyen de mezzanines supportant un convertisseur-analogique numérique. La brique de tête réalise la canalisation et un prétraitement. Elle est capable de transmettre tout le flux en numérique vers une deuxième brique. Cette deuxième brique permet de continuer les traitements, y compris de réaliser un deuxième brassage en cas de besoin. La figure suivante présente un exemple. La figure 11 présente un module à 8 récepteurs, il est bien sûr possible de prévoir un autre nombre de récepteurs.

Avantageusement, lorsque l'on cascade des modules, ou plus généralement s'il y a plus de ressources de calcul que de voies de signaux entrant, les traitements peuvent être répartis sur plusieurs ressources.

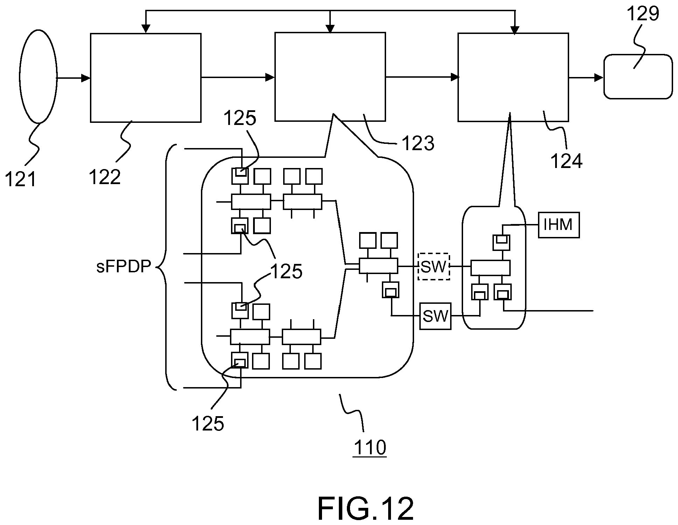

La figure 12 illustre un exemple d'application du dispositif selon l'invention où plusieurs étages de traitement sont mis en cascade. La demande de brevet FR 2 910 743 décrit un circuit de réception comportant une banque de filtres en cascade.

Le système de la figure 12 comporte un ensemble 122 de voies de réception 1 reliés à des moyens de traitements des signaux reçus 123. Les voies de réceptions reçoivent les signaux captées par des antennes 121.

Ces moyens de traitements 123 comportent notamment un dispositif tel que décrit précédemment. Ce dispositif peut être modulaire 110 comme illustré par la figure 11. Les filtres polyphasés utilisés peuvent être mis en cascade comme décrit dans la demande de brevet précitée. Les moyens de traitement comportent des ressources de calcul 3, une ressource étant associée à chaque récepteur, comme illustré par la figure 1. Dans une application d'écoute électromagnétique par exemple, ces ressources calculent notamment les directions d'arrivée (DOA) et la polarisation des ondes reçues.

Le dispositif de la figure 12 comporte des moyens 124 dit de « Back end processing » pour l'exploitation des résultats de calculs par exemple pour une application de visualisation 129 ou autre interface homme-machine. Cette configuration impose que les entrées/sorties, des cartes 61, 62, 63, 64, 50, des moyens de traitements des signaux 123 et celles du « Back end processing » soient compatibles. Cette contrainte ne présente pas de difficultés particulières dès lors que les cartes utilisent les technologies développées dans le cadre des standards Open VPX, qui permettent un certain niveau de standardisation et laissent ouvertes un certain nombre d'options au niveau des entrées/sorties.

Les entrées/sorties du système, notamment les liens avec les senseurs ou avec le reste du système (bus système, affichage vidéo, etc ...) sont réalisées par des mezzanines 125 portées par les cartes.

Les exemples de réalisation et d'applications précédents montrent que l'invention permet avantageusement la réalisation d'une machine modulaire, cascadable et extensible permettant de répartir et de traiter de manière déterministe tout le flux de données issu des voies parallèles sans rupture de ce flux. Par modulaire, on entend la capacité à équiper un nombre différent de briques de base en fonction du besoin. Par extensible, on entend la capacité de l'architecture à maintenir une accélération linéaire de la puissance de calcul en fonction du nombre de ressources ajoutées. Par déterministe, on entend la capacité à maintenir une synchronisation stricte des traitements.

L'architecture proposée par l'invention peut être mise en oeuvre sur de nombreuses applications nécessitant des échanges de données importants et une forte puissance de calcul. Elle peut en particulier être utilisée pour construire d'autres applications comme par exemple le traitement multifonctions permettant de mettre en oeuvre des traitements réactifs intégrant notamment une fonction de fusion de capteurs, pour des applications multi-senseurs RF et optroniques notamment. L'invention est particulièrement bien adaptée pour des applications liées au domaine du renseignement d'origine électromagnétique.

**Revendications**

1. Dispositif de réception numérique comportant N voies de réception (1), aptes à recevoir des signaux dans une bande de fréquences données, chacune des voies étant équipée d'un récepteur numérique (8) recevant les signaux numérisés de ladite bande de fréquence, lesdits signaux étant découpés dans chaque voie de réception en sous-bandes (2) par des moyens d'analyse (21), chaque récepteur numérique (8) comportant une ressource de calcul (3), **caractérisé en ce que** chaque récepteur opérant dans une sous-bande (2) qui lui est affectée et transférant les signaux des autres sous-bandes vers les récepteurs affectés auxdites autres sous-bandes, les récepteurs étant regroupés par paires (A1, A2), chaque récepteur (A1) d'une paire effectue le routage (10) de signaux vers le deuxième récepteur (A2) de ladite paire, les signaux routés étant les signaux des récepteurs (B2, C2, D2) des autres paires qui ne sont pas en liaison directe avec ledit deuxième récepteur.

2. Dispositif selon la revendication 1, **caractérisé en ce que** ladite bande de fréquences B est découpée en un nombre $N_{SB}$ de sous-bandes égale au nombre N de voies de réception.

3. Dispositif selon l'une quelconque des revendications 1 ou 2, **caractérisé en ce que** les voies de réception captent des signaux RF issues d'antennes (5), le découpage en sous-bandes étant effectué par analyse fréquentielle (21).

4. Dispositif selon l'une quelconque des revendications précédentes, **caractérisé en ce que** les voies de réception captent des signaux issus de senseurs optiques.

5. Dispositif selon l'une quelconque des revendications précédentes, **caractérisé en ce que** le nombre N de voies de réception est une puissance de 2.

6. Dispositif selon l'une quelconque des revendications précédentes, **caractérisé en ce que** le nombre de voies N est égal à 8.

7. Dispositif selon la revendication 6, **caractérisé en ce que** les récepteurs numériques (8) étant regroupés en quatre paires (A1, A2), (B1, B2), (C1, C2) et (D1, D2), les échanges se faisant selon les sous-bandes SB1, SB2, SB4, SB5, SB6, les récepteurs A1, A2, B1, B2, C1, C2, D1, D2 étant affectés respectivement aux sous-bandes SB1, SB2, SB3, SB4 SB5, SB6SB7 et SB8, SB1 correspondant aux $N_{SB}/8$ sous-bandes du 1$^{er}$ huitième de ladite bande B, SB2 correspondant aux $N_{SB}/8$ sous-bandes du 2$^{ème}$ huitième de B, SB3 correspondant aux $N_{SB}/8$ sous-bandes du 3$^{ème}$ huitième de B, SB4 correspondant aux $N_{SB}/8$ sous-bandes du 4$^{ème}$ huitièmes de B, SB5 correspondant aux $N_{SB}/8$ sous-bande du 5$^{ème}$ huitième B, SB6 correspondant aux $N_{SB}/8$ sous-bandes du 6$^{ème}$ huitième de B, SB7 correspondant aux $N_{SB}/8$ sous-bandes du 7$^{ème}$ huitième de B, SB8 correspondant aux $N_{SB}/8$ sous-bandes du 8$^{ème}$ huitièmes de B, les signaux de la sous-bande SBi reçus par A1 sont tranférés directement vers le récepteur associé à SBi, les signaux de la sous-bande SBi reçus par A2 sont transférés via A1, les signaux SBi reçus par B2 sont transférés directement, les signaux SBi reçus par C1 sont transférés directement, les signaux SBi reçus par C2 sont transférés via C1, les signaux SB3 reçus par D1 sont transférés directement et les signaux SBi reçus D2 sont transférés via D1, i variant de 1 à 8.

8. Dispositif selon l'une quelconque des revendications précédentes, **caractérisé en ce que** les transferts entre récepteurs numériques se faisant par des liaisons physiques bidirectionnelles, les paires sont implantées chacune sur une carte (61, 62, 63, 64) et reliées par une liaison physique, les liaisons physiques entre lesdites cartes étant réalisées par une carte (50) dite de liaison, les cartes de paires étant connectées à la carte de liaison.

9. Dispositif de réception numérique, **caractérisé en ce qu'**il est composé de modules (90) connectés en cascade, un module (90) étant un dispositif selon l'une quelconque des revendications précédentes , les modules étant reliés entre eux via les récepteurs, le premier récepteur et le deuxième récepteur d'une paire d'un module (90) communiquant respectivement avec le premier récepteur et le deuxième récepteur de la paire correspondante du module (90) précédent dans la chaîne cascadée.

10. Dispositif selon la revendication 8, **caractérisé en ce que** un module comporte 8 récepteurs numériques.

**Patentansprüche**

1. Vorrichtung für digitalen Empfang, enthaltend N Empfangskanäle (1), geeignet, Signale in einem gegebenen Frequenzband zu empfangen, wobei jeder Kanal mit einem digitalen Empfänger (8) zum Empfang digitalisierter Signale des Frequenzbandes ausgerüstet ist, wobei die Signale in jedem Empfangskanal durch Analysemittel (21) in Teilbänder (2) zerschnitten werden, wobei jeder digitale Empfänger (8) eine Rechenressource (3) enthält, **dadurch gekennzeichnet, dass** angesichts dessen, dass jeder Empfänger in einem ihm zugewiesenen Teilband (2) arbeitet und die Signale der anderen Teilbänder an die Empfänger weiterleitet, die diesen Teilbändern zugewiesen sind, wobei die Empfänger zu Paaren (A1, A2) gruppiert sind, jeder Empfänger (A1) eines Paares das Routing (10) von Signalen an den zweiten Empfänger (A2) des Paares bewerkstelligt, wobei die gerouteten Signale die Signale der Empfänger (B2, C2, D2) der anderen Paare sind, die nicht in direkter Verbindung mit dem zweiten Empfänger stehen.

2. Vorrichtung nach Anspruch 1, **dadurch gekennzeichnet, dass** das Frequenzband B in eine Anzahl $N_{SB}$ von Teilbändern zerschnitten wird, die der Anzahl N der Empfangskanäle entspricht.

3. Vorrichtung nach einem der Ansprüche 1 oder 2, **dadurch gekennzeichnet, dass** die Empfangskanäle HF-Signale von Antennen (5) empfangen, wobei das Zerschneiden in Teilbänder durch Frequenzanalyse (21) erfolgt.

4. Vorrichtung nach einem der vorhergehenden Ansprüche, **dadurch gekennzeichnet, dass** die Empfangskanäle Signale von optischen Sensoren empfangen.

5. Vorrichtung nach einem der vorhergehenden Ansprüche, **dadurch gekennzeichnet, dass** die Anzahl N der Empfangskanäle eine Potenz von 2 ist.

6. Vorrichtung nach einem der vorhergehenden Ansprüche, **dadurch gekennzeichnet, dass** die Anzahl N der Empfangskanäle 8 beträgt.

7. Vorrichtung nach Anspruch 6, **dadurch gekennzeichnet, dass** angesichts dessen, dass die digitalen Empfänger (8) zu vier Paaren (A1, A2), (B1, B2), (C1, C2) und (D1, D2) gruppiert sind, wobei der Austausch nach den Teilbändern SB1, SB2, SB3, SB4, SB5, SB6 erfolgt, wobei die Empfänger A1, A2, B1, B2, C1, C2, D1, D2 jeweils den Teilbändern SB1, SB2, SB3, SB4, SB5, SB6, SB7 und SB8 zugewiesen sind, wobei SB1 den $N_{SB}$/8 Teilbändern des 1. Achtels des Bandes B, SB2 den $N_{SB}$/8 Teilbändern des 2. Achtels von B, SB3 den $N_{SB}$/8 Teilbändern des 3. Achtels von B, SB4 den $N_{SB}$/8 Teilbändern des 4. Achtels von B, SB5 den $N_{SB}$/8 Teilbändern des 5. Achtels von B, SB6 den $N_{SB}$/8 Teilbändern des 6. Achtels von B, SB7 den $N_{SB}$/8 Teilbändern des 7. Achtels von B und SB8 den $N_{SB}$/8 Teilbändern des 8. Achtels von B entspricht, die von A1 empfangenen Signale des Teilbandes SBi direkt an den SBi zugewiesenen Empfänger weitergeleitet werden, die von A2 empfangenen Signale des Teilbandes SBi via A1 weitergeleitet werden, die von B2 empfangenen SBi-Signale direkt weitergeleitet werden, die von C1 empfangenen SBi-Signale direkt weitergeleitet werden, die von C2 empfangenen SBi-Signale via C1 weitergeleitet werden, die von D1 empfangenen SB3-Signale direkt weitergeleitet werden und die von D2 empfangenen SBi-Signale via D1 weitergeleitet werden, wobei i zwischen 1 und 8 variiert.

8. Vorrichtung nach einem der vorhergehenden Ansprüche, **dadurch gekennzeichnet, dass** angesichts dessen, dass die Weiterleitungen zwischen digitalen Empfängern über physikalische bidirektionale Verbindungen erfolgen, die Paare jeweils auf einer Karte (61, 62, 63, 64) angeordnet und über eine physikalische Verbindung verbunden sind, wobei die physikalischen Verbindungen über eine sogenannte Verbindungskarte (50) zustande kommen, wobei die Paarkarten an die Verbindungskarte angeschlossen sind.

9. Vorrichtung für digitalen Empfang, **dadurch gekennzeichnet, dass** sie aus in Kaskade verbundenen Modulen (90) besteht, wobei ein Modul (90) eine Vorrichtung nach einem der vorhergehenden Ansprüche ist, wobei die Module miteinander über Empfänger verbunden sind, wobei der erste Empfänger und der zweite Empfänger eines Paars eines Moduls (90) jeweils mit dem ersten Empfänger und dem zweiten Empfänger des entsprechenden Paars des vorherigen Moduls (90) in der kaskadierten Kette kommunizieren.

10. Vorrichtung nach Anspruch 8, **dadurch gekennzeichnet, dass** ein Modul 8 digitale Empfänger besitzt.

**Claims**

1. Digital receiving device comprising N reception channels (1) which are capable of receiving signals in a range of specific frequencies, each of the channels being provided with a digital receiver (8) which receives the digitised signals of said frequency band, said signals being divided in each reception channel into sub-bands (2) by analysis means (21), each digital receiver (8) comprising a calculation resource (3), **characterised in that**, with each receiver operating in a sub-band (2) which is assigned to it and transferring the signals of the other sub-bands to the receivers which are assigned to said other sub-bands, the receivers being grouped in pairs (A1, A2), each receiver (A1) of a pair carries out the routing (10) of signals to the second receiver (A2) of said pair, the routed signals being the signals of the receivers (B2, C2, D2) of the other pairs which are not directly connected to said second receiver.

2. Device according to claim 1, **characterised in that** said frequency band B is divided into a number $N_{SB}$ of sub-bands which is equal to the number N of reception channels.

3. Device according to either claim 1 or claim 2, **characterised in that** the reception channels capture signals RF which originate from antennae (5), the division into sub-bands being carried out by means of frequency analysis (21).

4. Device according to any one of the preceding claims, **characterised in that** the reception channels capture signals which originate from optical sensors.

5. Device according to any one of the preceding claims, **characterised in that** the number N of reception channels is a power of 2.

6. Device according to any one of the preceding claims, **characterised in that** the number of channels N is equal to 8.

7. Device according to claim 6, **characterised in that**, with the digital receivers (8) being grouped into four pairs (A1, A2), (B1, B2), (C1, C2) and (D1, D2), the exchanges being carried out in accordance with the sub-bands SB1, SB2, SB3, SB4, SB5, SB6, the receivers A1, A2, B1, B2, C1, C2, D1, D2 being assigned to the sub-bands SB1, SB2, SB3, SB4, SB5, SB6, SB7 and SB8, respectively, SB1 corresponding to the $N_{SB}/8$ sub-bands of the first eighth of the band B, SB2 corresponding to the $N_{SB}/8$ sub-bands of the second eighth of B, SB3 corresponding to the $N_{SB}/8$ sub-bands of the third eighth of B, SB4 corresponding to the $N_{SB}/8$ sub-bands of the fourth eighth of B, SB5 corresponding to the $N_{SB}/8$ sub-bands of the fifth eighth of B, SB6 corresponding to the $N_{SB}/8$ sub-bands of the sixth eighth of B, SB7 corresponding to the $N_{SB}/8$ sub-bands of the seventh eighth of B, SB8 corresponding to the $N_{SB}/8$ sub-bands of the eighth eighth of B, the signals of the sub-band SBi received by A1 are transferred directly to the receiver which is associated with SBi, the signals of the sub-band SBi received by A2 are transferred via A1, the signals SBi received by B2 are transferred directly, the signals SBi received by C1 are transferred directly, the signals SBi received by C2 are transferred via C1, the signals SB3 received by D1 are transferred directly and the signals SBi received by D2 are transferred via D1, i varying from 1 to 8.

8. Device according to any one of the preceding claims, **characterised in that**, with the transfers between digital receivers being carried out by means of bidirectional physical connections, the pairs are each inserted in a card (61, 62, 63, 64) and connected via a physical connection, the physical connections between said cards being produced by a card (50) which is referred to as the connection card, the cards of pairs being connected to the connection card.

9. Digital reception device, **characterised in that** it is composed of modules (90) which are connected in a cascading manner, a module (90) being a device according to any one of the preceding claims, the modules being connected to each other via the receivers, the first receiver and the second receiver of a pair of a module (90) communicating with the first receiver and the second receiver of the corresponding pair of the preceding module (90) in the cascading chain, respectively.

10. Device according to claim 8, **characterised in that** a module comprises 8 digital receivers.

| Voie 1 | | SB | SB | SB | SB | SB | SB | SB | SB | **F** |
|--------|--|----|----|----|----|----|----|----|----|-------|
| Voie 2 | | 1 | 2 | 3 | 4 | 5 | 6 | 7 | 8 | |
| Voie 3 | | | | | | | | | | |
| Voie 4 | | | | | | | | | | |
| Voie 5 | | | | | | | | | | |
| Voie 6 | | | | | | | | | | |
| Voie 7 | | | | | | | | | | |
| Voie 8 | | | | | | | | | | |

2

1

3

FPGA 1  FPGA 2  FPGA 3  FPGA 4  FPGA 5  FPGA 6  FPGA 7  FPGA 8

| DOA + POL / SB 1 |
|------------------|
| DOA + POL / SB 2 |
| DOA + POL / SB 3 |
| DOA + POL / SB 4 |
| DOA + POL / SB 5 |
| DOA + POL / SB 6 |
| DOA + POL / SB 7 |
| DOA + POL / SB 8 |

4

# FIG.1a

FIG.1b

FIG.1c

FIG.1d

FIG.2

FIG.3

FIG.4a

FIG.4b

FIG.5

FIG.6

FIG.7

FIG.8

FIG.9

FIG.10

FIG.11

FIG.12

**EP 2 989 721 B1**

## RÉFÉRENCES CITÉES DANS LA DESCRIPTION

**Documents brevets cités dans la description**

- FR 2953079

- FR 2910743